# EUROPEAN PATENT APPLICATION

(11) **EP 2 941 024 A1**
(43) Date of publication of application: **04.11.2015**
(21) Application number: 14200588.3
(22) Date of filing: 30.12.2014
(51) Int. Cl.: H04W 4/06, H04W 4/12

(54) **Method of performing cell broadcast message management**

(30) Priority: 29.04.2014 TW 103115384
(71) Applicant: Acer Incorporated, New Taipei City 221 (TW)
(72) Inventor: Chuang, Chia-Yun, 221 New Taipei City (TW)
(74) Representative: Becker Kurig Straus

(57) **Abstract**

During a booting procedure, a user equipment is configured to update the language option of a CBS user interface according to a language indication elementary file of a smartcard. After receiving a CBM, the CBM is displayed or filtered via the CBS user interface according to the language option. When receiving a user command associated with updating the language option, the language option and the language indication elementary file are updated according to the user command.

## Description

### Field of the Invention

The present invention is related to a method of performing cell broadcast message management by synchronizing a smartcard and a cell broadcast service user interface of a user equipment.

### Background of the Invention

Cell broadcast service (CBS) and short message service (SMS) are geographically focused messaging services provided within wireless networks. Compared to an SMS message transmitted on a point-to-point basis, CBS allows a base transceiver station (BTS) to simultaneously transmit a cell broadcast message (CBM) to multiple CBS-enabled user equipment in a specified area. The CBS coverage range may be adjusted flexibly, from a single cell to an entire public land mobile network (PLMN). A CBS-enabled user equipment may receive various types of contents, such as business announcements, weather forecasts, traffic updates, international/domestic news, stock market quotes, or commercials.

Subscriber identity module (SIM) card is a smartcard that securely stores the international mobile subscriber identity (IMSI) used to identify and authenticate subscribers, SMS data and contact information on mobile telephony devices. The hardware structure of a SIM card includes a central process unit (CPU), read-only memory (ROM), random access memory (RAM), electrically erasable programmable read-only memory (EEPROM), and an input/output (I/O) circuit. The hierarchical logic data structure of a SIM card includes 3 types of files: elementary file (EF), dedicated file (DF) and master file (MF).

After activating the CBS function of a user equipment, the user is normally required to set corresponding functions via a CBS user interface. For example, the user may opt to receive CBMs of a specific language or a specific type only, wherein the setting associated with the CBM language is stored in the data coding scheme (DCS) of the CBM. According to the 3rd Generation Partnership Project (3GPP) specification TS 31.102, after receiving a CBM, the user equipment is configured to verify whether the language indicated in the DCS of the received CBM is included in a language indication elementary file (EF_{LI}) of its SIM card and filter the CBM when necessary. If the user opts to receive German CBMs via the CBS user interface, it's possible that the language indication elementary file EF_{LI} of the SIM card only includes the language code associated with English. When receiving an English CBM, the user equipment may display the English CBM on the CBS user interface after verifying that English is indicated in the language indication elementary file EF_{LI} of the SIM card. When receiving a German CBM, the user equipment does not display the German CBM on the CBS user interface since German is not indicated in the language indication elementary file EF_{LI} of the SIM card. Therefore, the prior art method may inadequately filter CBMs of certain languages which the user opt to receive, thereby causing inconvenience to the user.

### Summary of the Invention

The present invention aims at providing a method of performing cell broadcast message management which performs adequately message filtering based on user preference.

This is achieved by a method of performing cell broadcast message management according to claim 1. The dependent claims pertain to corresponding further developments and improvements.

As will be seen more clearly from the detailed description following below, the claimed method of performing CBM management includes a user equipment, when performing a booting procedure, updating a language option of a user interface according to a language indication elementary file of a smartcard; the user equipment displaying or filtering a CBM via the user interface according to the language option after receiving the CBM; and the user equipment updating the language option and the language indication elementary file according to a user command when receiving user command which is associated with updating the language option.

### Brief Description of the Drawings

In the following, the invention is further illustrated by way of example, taking reference to the accompanying drawings.
FIG. 1 is a flowchart illustrating a method of performing CBM management in a user equipment according to the present invention.
FIG. 2 is a diagram illustrating the cell broadcast message identifier selection elementary file EF_{CBMI} defined in the 3GPP specification TS 31.102.
FIG. 3 is a diagram illustrating the cell broadcast message identifier selection for data download elementary file EF_{CBMID} defined in the 3GPP specification TS 31.102.
FIG. 4 is a diagram illustrating the cell broadcast message identifier range selection elementary file EF_{CBMIR} defined in the 3GPP specification TS 31.102.
FIG. 5 is a diagram illustrating the language indication elementary file EF_{LI} defined in the 3GPP specification TS 31.102.

### Detailed Description

The present invention provides a method of performing CBM management in a user equipment. The present method may be applied to electronic devices including, but not limited to, mobile telephones, personal digital assistants, handheld computers, tablet computers, nettop computers, laptop computers, or other devices with similar telecommunication capabilities. However, the type of user equipment does not limit the scope of the present invention.

The present method may be applied to a user equipment inserted with various types of smartcards including, but not limited to, a SIM card for global system for mobile communications (GSM) system, a USIM card for universal mobile telecommunications system (UMTS), or a removable user identity module (R-UIM) card/code division multiple access (CDMA) user identity module (CSIM) card for CDMA systems. However, the type of the smartcard does not limit the scope of the present invention.

The present method may be applied to a user equipment inserted with a smartcard of various sizes including, but not limited to, a standard Mini SIM card, a Micro SIM card or a Nano SIM card. However, the size of the smartcard does not limit the scope of the present invention.

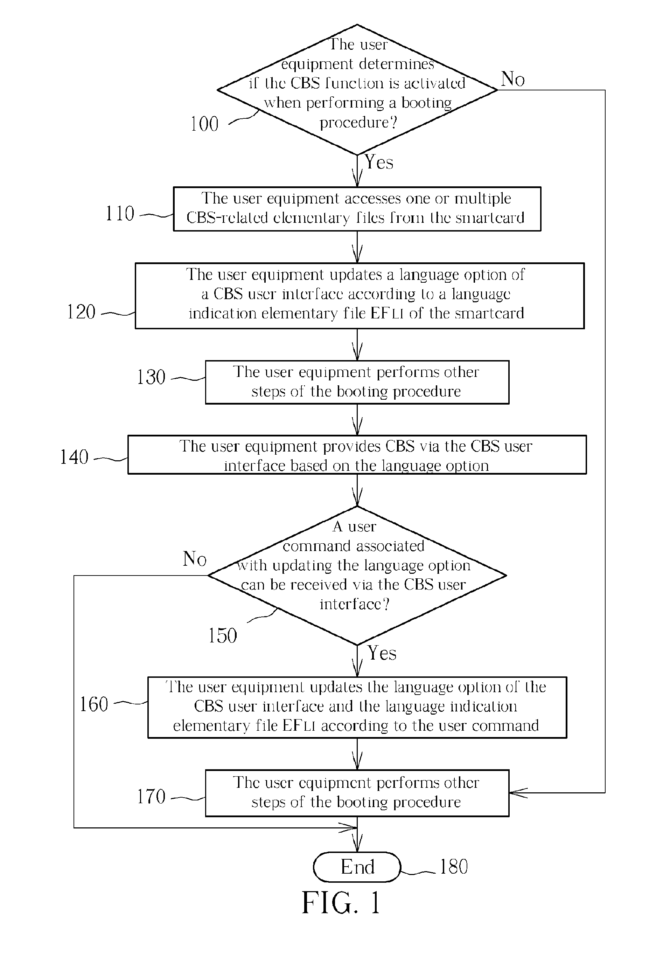

FIG. 1 is a flowchart illustrating a method of performing CBM management in a user equipment according to the present invention. The flowchart in FIG. 1 includes the following steps:
- Step 100:: the user equipment, when performing a booting procedure, determines if the CBS function is activated; if yes, execute step 110; if no, execute step 170.
- Step 110:: the user equipment accesses one or multiple CBS-related elementary files from the smartcard; execute step 120.
- Step 120:: the user equipment updates a language option of a CBS user interface according to a language indication elementary file EF_{LI} of the smartcard; execute step 130.
- Step 130:: the user equipment performs other steps of the booting procedure; execute step 140.
- Step 140:: the user equipment provides CBS via the CBS user interface based on the language option; execute step 150.
- Step 150:: the user equipment determines if a user command associated with updating the language option can be received via the CBS user interface; if yes, execute step 160; if no, execute step 170.
- Step 160:: the user equipment updates the language option of the CBS user interface and the language indication elementary file EF_{LI} according to the user command; execute step 170.
- Step 170:: the user equipment performs other steps of the booting procedure; execute step 140.
- Step 180:: end.

In step 100, the user equipment, when performing the booting procedure, may determine if the CBS function is activated based on its database (WHOSE DATABASE? SEE CLAIM 2 SAYS "A DATABASE). If the CBS function is deactivated, step 170 is then executed for performing other steps of the booting procedure. If the CBS function is activated, step 110 is then executed.

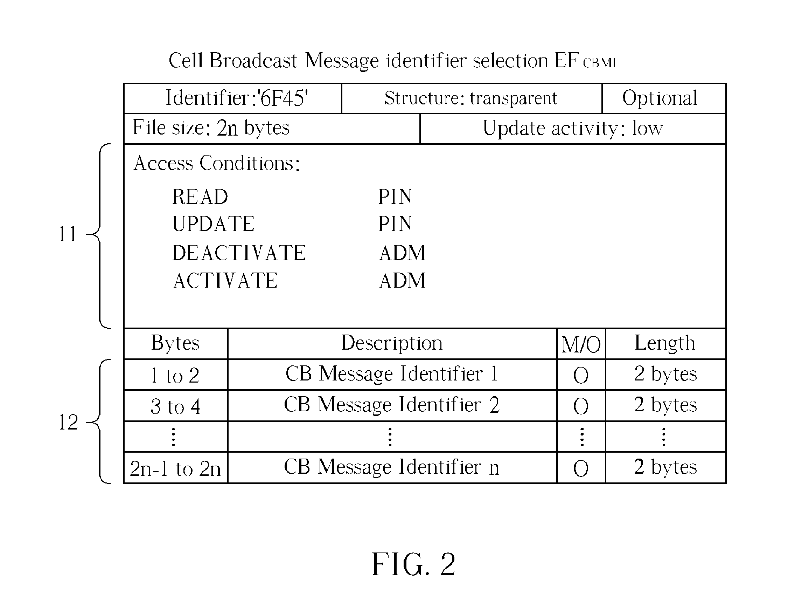

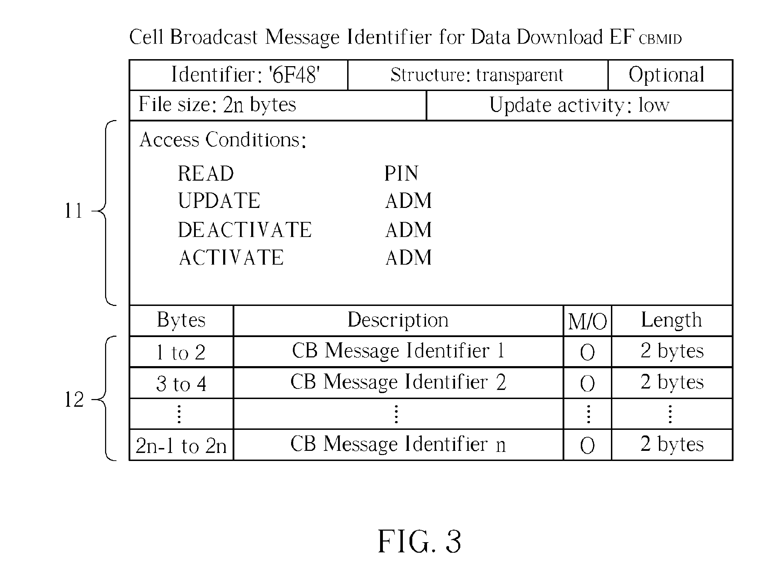

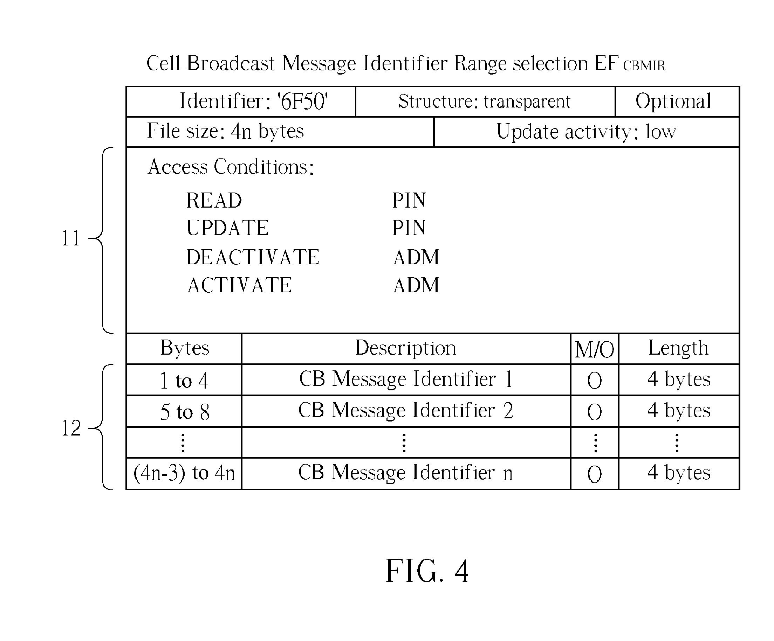

In step 110, the one or multiple CBS-related elementary files may include, but are not limited to, a cell broadcast message identifier selection elementary file (EF_{CBMI}), a cell broadcast message identifier selection for data download elementary file (EF_{CBMID}), and/or a cell broadcast message identifier range selection elementary file (EF_{CBMIR}) accessed from the smartcard. FIG. 2 is a diagram illustrating the cell broadcast message identifier selection elementary file EF_{CBMI} defined in the 3GPP specification TS 31.102. FIG. 3 is a diagram illustrating the cell broadcast message identifier selection for data download elementary file EF_{CBMID} defined in the 3GPP specification TS 31.102. FIG. 4 is a diagram illustrating the cell broadcast message identifier range selection elementary file EF_{CBMIR} defined in the 3GPP specification TS 31.102. The EF_{CBMI} and EF_{CBMIR} elementary files are used to indicate the type of CBM contents which the user wants the user equipment to receive. The EF_{CBMID} elementary file is used to indicate the type of CBM contents broadcast to the user equipment. Field 11 depicts the access condition of reading, updating, deactivating and activating the above elementary files "PIN" means that EF_{CBMI}, EF_{CBMID} and EF_{CBMIR} can only be read or updated with a valid PIN. "ADM" means that EF_{CBMI}, EF_{CBMID} and EF_{CBMIR} can only be updated, deactivated or activated by authorized administrators.

According to the 3GPP specification TS 23.041, a maximum 65535 physical channels may be allocated as CBS channels, represented by the hexadecimal CBS message identifiers 0000∼FFFF depicted in field 12. Channels 4096-4223 represented by the hexadecimal CBS message identifiers 1000∼107F are used for downloading cell broadcast data. Channels 4370-4382 represented by the hexadecimal CBS message identifiers 1112-111 E are used for receiving mandatory public warning CBMs. Channels 4383-4395 represented by the hexadecimal CBS message identifiers 111F∼112B are used for receiving optional public warning CBMs. In step 110, the user equipment may access the contents of the EF_{CBMI}, EF_{CBMID} and EF_{CBMIR} elementary files, thereby receiving CBMs via corresponding channels.

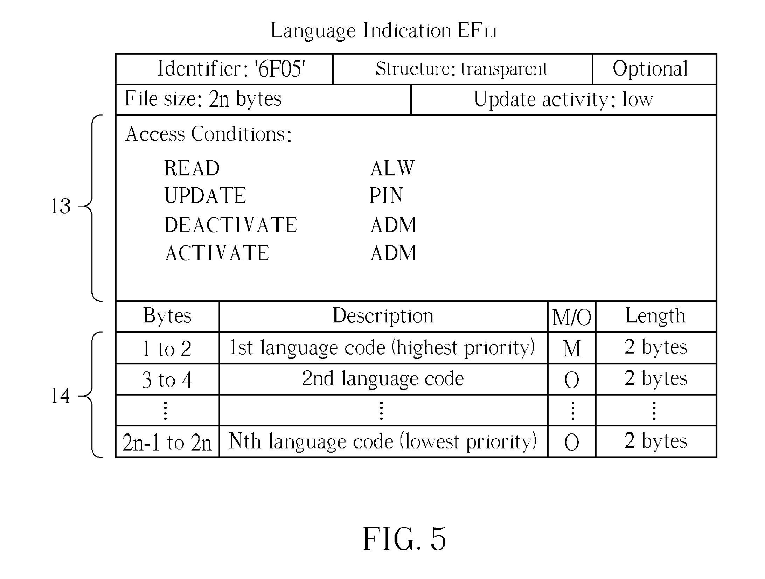

FIG. 5 is a diagram illustrating the language indication elementary file EF_{LI} defined in the 3GPP specification TS 31.102. Field 13 depicts the access condition of reading, updating, deactivating and activating the language indication elementary file EF_{LI}. "ALW" means that EF_{LI} can be read at all time. "PIN" means that EF_{LI} can only be updated with a valid PIN. "ADM" means that EF_{LI} can only be deactivated and activated by authorized administrators. As depicted in field 14, bytes 1 to 2n are used to store a plurality of language codes associated with respective languages defined in the 3GPP specification TS 23.038. The language codes may be stored according to the user preference in languages.

In step 120, the user equipment may update the language option of the CBS user interface according to the language indication elementary file EF_{LI} of the smartcard. Before performing the booting procedure, it is assumed that the initial setting of the CBS user interface allows English and Mandarin CBMs to be received and that the language indication elementary file EF_{LI} of the smartcard includes the language codes associated with English, Mandarin and German. Under such circumstance, the user equipment is configured to update the language option so that the CBS user interface can receive English, Mandarin and German CBMs in step 120. Next, the user equipment may perform other steps of the booting procedure in step 130.

In step 140, the user equipment may provide CBS via the CBS user interface based on the updated language option. For example, it is assumed that the CBS user interface can receive English, Mandarin and German CBMs after updating the language option in step 120. If a German CBM, an English CBM and a Spanish CBM are received in step 140, the user equipment may determine whether these languages are included in the language option of the CBS user interface based on the DCSs of theses CBMs and decide whether these CBMs should be displayed or filtered. In other words, the Spanish CBM is filtered and the user equipment only displays the German and English CBMs on the CBS user interface.

When receiving the CBS, the user may want to change the language option of the CBS user interface by issuing the user command in step 150. In response, the user equipment is configured to update the language indication elementary file EF_{LI} according to the user command. For example, if the user adds the French language into the language option of the CBS user interface, the user equipment is configured to add the language code associated with the French language in the language indication elementary file EF_{LI}. This way, the user equipment may be able to receive French CBMs after performing the next booting procedure.

The present invention provides a method of performing CBM management by synchronizing the language indication elementary file EF_{LI} of the smartcard and the language option of the CBS user interface. Therefore, the present method can perform adequately CBM filtering based on user preference.

## Claims

1. A method of performing cell broadcast message, CBM, management, the method **characterized in that** it comprises the steps of:
a user equipment, when performing a booting procedure, updating a language option of a user interface according to a language indication elementary file of a smartcard;
the user equipment displaying or filtering a CBM via the user interface according to the language option after receiving the CBM; and
the user equipment updating the language option and the language indication elementary file according to a user command when receiving the user command which is associated with updating the language option.

2. The method of claim 1, further **characterized by** comprising the further step of:
the user equipment, when performing the booting procedure, determining if a cell broadcast service, CBS, function is activated based on a database.

3. The method of claim 2, further **characterized by** comprising the further step of:
the user equipment accessing a cell broadcast message identifier selection elementary file, a cell broadcast message identifier selection for data download elementary file, or a cell broadcast message identifier range selection elementary file from the smartcard after determining that the CBS function is activated.

4. The method of any of claims 1-3, **characterized in that** the user equipment updating the language option according to the language indication elementary file includes setting the language option so that the user interface is able to display at least languages associated with all language codes stored in the language indication elementary file.

5. The method of any of claims 1-4, further **characterized by** comprising the further step of:
determining a language of the CBM by accessing a data coding scheme, DCS, of the CBM; and
displaying the CBM via the user interface when the language of the CBM is included in the language option or filtering the CBM via the user interface when the language of the CBM is not included in the language option.

6. The method of any of claims 1-5, further **characterized by** comprising the further step of:
adding a specific language to the language option according to the user command; and
storing a language code associated with the specific language in the language indication elementary file.
